# EUROPEAN PATENT APPLICATION

(11) **EP 1 526 760 A1**
(43) Date of publication of application: **27.04.2005**
(21) Application number: 03103881.3
(22) Date of filing: 21.10.2003
(51) Int. Cl.: H05B 41/08

(54) **Multiple electroluminescent lamp driver**

(71) Applicant: IEE INTERNATIONAL ELECTRONICS & ENGINEERING S.A., 6468 Echternach (LU)
(72) Inventor: Lamesch, Laurent, 4881 Lamadelaine (LU)
(74) Representative: Beissel, Jean

(57) **Abstract**

The invention relates to an electroluminescent (EL) lamp driver for controlling the luminescent brightness of at least two EL lamps (28, 38), wherein the driver is adapted to receive at least two setpoint values corresponding to luminescent brightness of the EL lamps and to create charge waveforms (128, 138) in accordance with the received setpoint values for charging or discharging the EL lamps (28, 38).

## Description

### FIELD OF THE INVENTION

The present invention relates to a device for driving at least two electroluminescent lamps.

### BACKGROUND OF THE INVENTION

Electroluminescence (EL) is the non-thermal conversion of electrical into luminous energy. Well known electroluminescent devices are light emitting diodes (LEDs), in which light is generated by electron-hole pair recombination near a pn junction. Also known are electroluminescent lamps (EL lamps) which have become a popular light source for backlighting Liquid Crystal Displays.

In EL Lamps, light is generally generated by impact excitation of a light emitting center (called the activator) by high energy electrons in materials like ZnS:Mn. The electrons gain their high energy from an high electric field. Therefore, this type of electroluminescence is often called high field electroluminescence. Thus, a high voltage is required for driving EL lamps.

The problem with conventional drivers for EL lamps with low complexity on the high-voltage supply side and with a single high-voltage supply is that it is not possible to independently drive two separate EL lamps in such a way that the luminescent brightness of the two lamps is independently continuously controllable.

The currently available integrated dual EL lamp drivers, for example HV839 from Supertex Inc., Sipex SP4490, IMP IMP522, NPC SMS 145 A, only allow each of the two EL lamps to be turned fully on or off. The luminescent brightness of the two lamps, when switched on, can only be controlled in common, as it is also disclosed in US-Patent 6,515,522. Another costly implementation, disclosed in US-Patent 6,144,164, controls the lamps sequentially.

### OBJECT OF THE INVENTION

It is an object of the present invention to provide a device for driving at least two electroluminescent lamps, with which the luminescent brightness of the at least two electroluminescent lamps can be controlled independently and continuously.

### SUMMARY OF THE INVENTION

A basic idea underlying the present invention is to control the charging and discharging of EL lamps by the charge waveform. According to the invention, this can be implemented by means of logic circuitry.

The present invention relates to an electroluminescent lamp driver for controlling the luminescent brightness of at least two EL lamps, wherein the driver is adapted to receive at least two setpoint values corresponding to luminescent brightness of the EL lamps and to create charge waveforms in accordance with the received setpoint values for charging or discharging the EL lamps. Typically, the charge waveforms are created depending on the desired luminescent brightness as determined by a setpoint value. This can be done either in open or closed loop control. For example, in an open loop control implementation, a table can contain various parameters essential for the control of an EL lamp which correspond to different setpoints. Then, if a specific setpoint value is received, the corresponding parameters can be looked up, and depending on these parameters a charge waveform for the EL lamp can be generated.

Preferably, the driver is adapted to create a first charge waveform for charging a first one of the EL lamps with the highest desired luminescent brightness and a second charge waveform for charging the other EL lamp or lamps with lower desired luminescent brightness.

Particularly, the first charge waveform fully charges the first one of the EL lamps with the highest desired luminescent brightness and the second charge waveform has essentially the same waveform as the first charge waveform during a time interval which is smaller than the time interval during which the first one of the EL lamps is charged.

The driver can comprise a controlling device which is adapted to receive on its inputs the setpoint values corresponding to the desired luminescent brightness of the at least two EL lamps and actual values corresponding to the actual luminescent brightness of the at least two EL lamps, to compare the setpoint value and the actual value for each of the at least two lamps, and to drive charging means, discharging means, and H-bridges for the EL lamps in such a way that the setpoint value and the actual value for each of the at least two EL lamps are substantially equal.

In a preferred embodiment of the driver, the controlling device is adapted so that the luminescent brightness of the EL lamp with the highest luminescent brightness setpoint is set by controlling the output voltage of the charging means, and the luminescent brightness of the EL lamp or lamps with the lower luminescent brightness setpoint or setpoints is set by controlling the time interval during which this EL lamp or these EL lamps is/are charged in parallel to the first EL lamp.

Furthermore, the controlling device can comprise a controller for each of the at least two EL lamps, wherein each controller receives on its inputs the setpoint value and the actual value of a corresponding one of the at least two EL lamps and is adapted to generate a control signal on its output for controlling the charging and discharging means or a pulse-width modulator for generating a control signal for controlling the charging or discharging of the EL lamp or lamps with the lower luminescent brightness setpoint or setpoints. Preferably, the controllers are PI controller.

The charging means can be a high voltage power supply which is able to source current into the EL lamps.

The power supply should have a high output resistance in order to keep the strain on the EL lamps during charging small.

Preferably, the power supply is a step-up switching power supply with a control input for setting the duty cycle on the primary side switching.

The discharging means can be any device which is able to sink current out of the EL lamps.

Preferably, the device has a control input for determining the amount of sink current.

Preferably, the device is a resistor, a current sink based on a transistor, or a step-down switching power supply with a charge storage device on the primary side for absorbing energy removed from the EL lamp or lamps.

### BRIEF DESCRIPTION OF THE DRAWINGS

The present invention will now be described, by way of example, with reference to the accompanying drawings, in which:
Fig. 1 shows a first embodiment of an electroluminescent lamp driver according to invention with an open loop control;
Fig. 2 shows a second embodiment of the electroluminescent lamp driver according to the invention with a closed loop control; and
Fig. 3 shows a timing diagram with waveforms of signals of the driver of Fig. 2.

### DETAILED DESCRIPTION OF PREFERRED EMBODIMENTS

Preferred embodiments of an EL lamp driver in accordance with the invention will now be described. In the present embodiments, the driver is designed to be used to drive a dual (or multiple) EL lamp.

In the following description the same and/or equal and/or similar elements can be denoted with the same reference numerals.

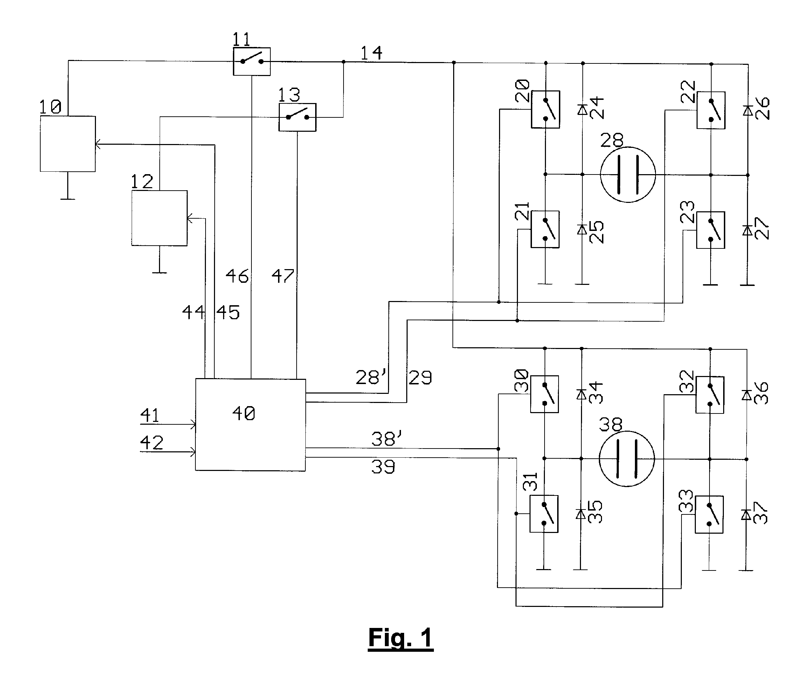

Fig. 1 shows an electroluminescent lamp driver for two EL lamps 28 and 38 with an open loop control. The driver comprises high voltage charging means 10, discharging means 12, one H-bridge 20-23 and 30-33 for each of the two EL lamps 28 and 38, and a controlling device 40.

The controlling device 40 receives input control voltages at two setpoint inputs 41 and 42 in order to control the brightness of the two EL lamps 28 and 38.

The input control voltages received at input 41 and 42 correspond to the desired luminance brightness for the EL lamps 28 and 38, respectively.

The controlling device 40 generates control signals 44-47, 28', 29, 38', and 39 for controlling the charging and discharging of the two EL lamps 28 and 38 in accordance with the received input control voltages. Particularly, it generates control signals 44 and 45 for controlling the discharging means 12 and charging means 10, respectively. Further it generates control signals 46 and 47 for the charging switching device 11 and discharging switching device 13, respectively. The switching devices 20, 23 and 21, 22 of the H-bridge for EL lamp 28 are controlled by signals 28' and 29, respectively. The switching devices 30, 33 and 31, 32 of the H-bridge for EL lamp 38 are controlled by signals 38' and 39, respectively.

The controlling device 40 can be implemented by means of a microcontroller programmed to process the received input control voltages and to generate the above mentioned control signals thereof. Particularly, the controlling device 40 generates a charge waveform for the EL lamp with the higher luminescent brightness of the both EL lamps 28 and 38. If EL lamp 28 is the lamp with the higher brightness, then the control signals 28' and 29 for charging the lamp comprise a charge waveform which fully charges the lamp. The control signals 38' and 39 comprise essentially the same waveform as the control signals 28' and 29, but merely charge the EL lamp 38 as determined by the input control voltage at setpoint input 42, i.e. during a time interval which is smaller compared to the charging time interval of the first lamp, i.e. EL lamp 28. The charging time interval for the second EL lamp 38 is chosen in order to achieve the desired brightness as determined by the input control voltage. This can be programmed in a memory of the controlling device, e.g. by means of a table comprising values for brightness and the corresponding charge time internals.

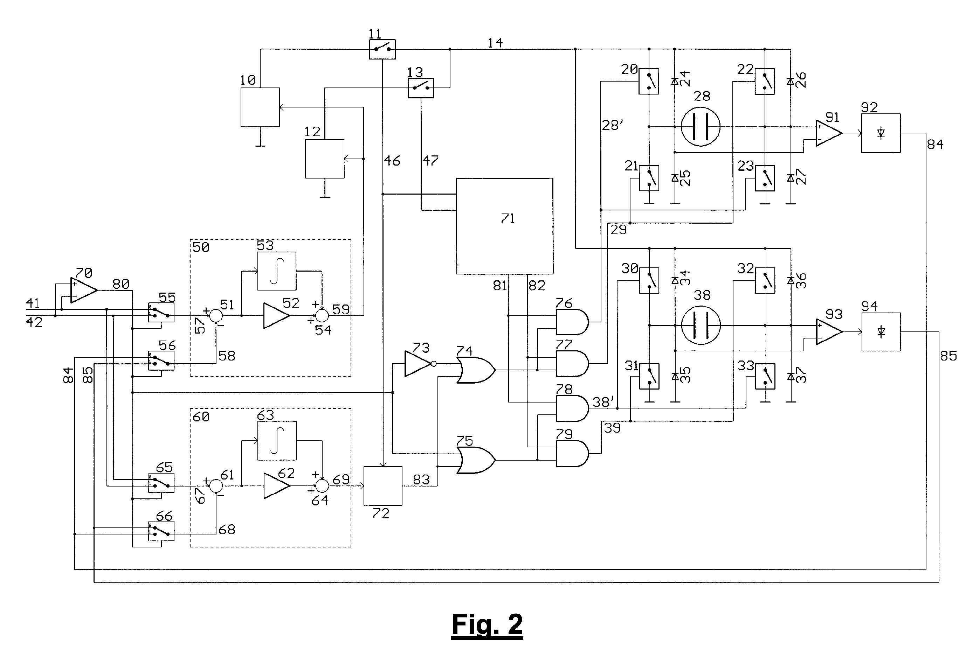

Fig. 2 shows an implementation of the driver according to the invention with a closed loop control. A controlling device comprises setpoint inputs 41 and 42 each of which receives an input control voltage which corresponds to the desired luminance brightness for the EL lamps 28 and 38 respectively. Furthermore, it comprises an input 84 for receiving an actual value of the EL lamp 28 and an input 85 for receiving an actual value of the EL lamp 38. A comparator 70 of the controlling device compares the values of the two setpoints against each other, and outputs a logical '0' if the setpoint for EL lamp 28 is higher than the setpoint for EL lamp 38, and a logical T otherwise.

Two PI (proportional/integrating) controller 50 and 60 are provided in the controlling device to process the received signals.

Should the setpoint value at input 41 be higher than at input 42, then the PI controller 50 of the controlling device receives at its setpoint input 57 the value of setpoint input 41 through a multiplexer 55 (the multiplexer position is defined by the logical '0' on comparator output 80) and at its actual value input 58 the actual value of the luminescent brightness of EL lamp 28 through a multiplexer 56.

The PI controller 60 receives at its setpoint input 67 the value of setpoint input 42 through a multiplexer 65, and at its actual value input 68 the actual value of the luminescent brightness of EL lamp 38 through a multiplexer 66.

If the set point value at input 41 is lower than at input 42, then the inputs of the two PI controllers 50 and 60 are exchanged between each other through the action of the multiplexers 55, 56, 65, 66.

In this embodiment, the controllers 50 and 60 are PI controllers only for illustrative purposes, they could be replaced by any other kind of closed loop controller which brings the difference between its setpoint input and actual value input to substantially zero through its controlling action.

PI controller 50 drives the control inputs of charging means 10 and discharging means 12. Charging means 10 can be any high voltage power supply which is able to source current into the EL lamps 28 and 38 and with a control input which determines the output voltage or amount of sourcing current of the supply, but preferably a power supply with a relatively high output resistance in order to keep the strain on the EL lamps during charge time small. An example is a step-up switching power supply where the control input sets the duty cycle of the primary side switching.

Discharging means 12 can be any device which is able to sink current out of the EL lamps, and preferably, but not necessarily, with a control input which determines the amount of sinking current. Examples are a resistor, or a current sink based on a transistor, or the mentioned switching power supply operated in reverse (step-down) direction with a charge storage device on the primary side to absorb the energy removed from the EL lamp.

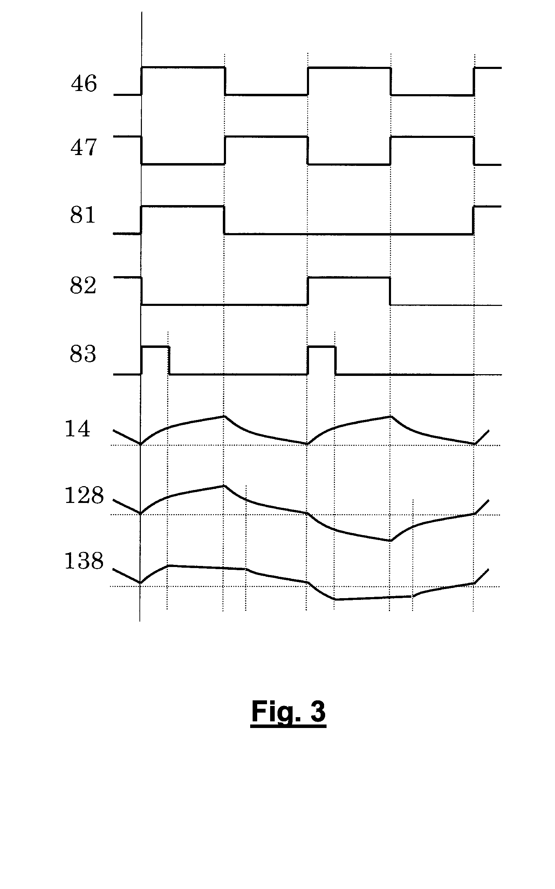

Switching devices 11 and 13 alternately source current to or sink current from the supply node 14. The switching devices 11 and 13 are controlled by a sequencer 71 of the controlling device through the control lines 46 and 47. An example of the waveforms of the charge and discharge control lines 46 and 47 respectively, and of the supply node 14, are shown in the timing diagram in Fig. 3. The numbers in the timing diagram correspond to the control line numbers in Fig. 2, the signals in Fig. 3 are active if they are logically 'high'.

PI controller 60 drives the control input of a pulse-width modulator 72 of the controlling device. Pulse-width modulator 72 accepts at its inputs a control signal 69 from PI controller 60 and a charging control signal 46. The pulse width at the output 83 of pulse-width modulator 72 is substantially proportional to the input voltage of the output 69 of PI controller 60. The minimum pulse width at output 83 is substantially 0 seconds for the minimum voltage on control line 69, and the maximum pulse width is substantially equal to the pulse width of the charging control signal 46 for the maximum voltage on control line 69. An example of the timing of output signal 83 is shown in Fig. 3.

Sequencer 71, together with an inverting gate 73, logical OR gates 74, 75, and logical AND gates 76, 77, 78, 79 determines whether the EL lamps 28 and 38 are either charged in the (arbitrarily defined) positive or negative direction, or if they are not charged at all. Control lines 81 and 82 determine the charging direction. A logical 'high' on line 81 enables the positive charging of both EL lamps 28, 38, while a logical 'high' on line 82 enables the negative charging of both EL lamps 28, 38.

If the setpoint value of input 41 is higher than the setpoint value of input 42, then control lines 81 and 82 are logically connected to line 28' and line 29 respectively through AND gates 76 and 77. One of the lines 28' or 29 is then always logically 'high', which implies that the luminescent brightness of EL lamp 28 is wholly controlled by the PI controller 50. The lines 38' and 39 are only logically 'high' if the control lines 81 and 82 are respectively logically 'high' and the output 83 of pulse-width modulator 72 is logically 'high', which implies that the luminescent brightness of EL lamp 38 is wholly controlled by the PI controller 60.

If the setpoint value of input 41 is lower than the setpoint value of input 42, the reverse is true, and EL lamp 28 is controlled by PI controller 60, and EL lamp 38 is controlled by PI controller 50.

If line 28 is logically 'high' and line 29 is logically 'low', then switching means 20 and 23 are on, switching means 22 and 21 are off, and EL lamp 28 is charged in the positive direction. If discharge means 12 is active and switching device 13 is on, then EL lamps 28 and 38 are discharged through diodes 24 and 27, or 25 and 26 depending on the polarity of their charge, respectively 34 and 37, or 35 and 36. Waveforms 128 and 138 in Fig. 3 respectively are examples for the voltage across EL lamps 28 and 38 respectively for the case where the setpoint on input 41 is higher than the setpoint on input 42.

Difference amplifiers 91 and 93, and rectifiers 92 and 94, respectively determine the actual value of the luminance brightness of EL lamps 28 and 38 respectively. In the shown example, the rectified voltage differences across the EL lamps 28 and 38 are used as actual values of the luminance brightness, however it is clear that other quantities can be used as actual value, for example the averaged absolute current, the absolute peak voltage amplitude, or the real luminescent brightness measured with a light sensitive electronic device, such as a photodiode.

It is clear that this implementation is only shown to illustrate the idea and that other implementations are possible, for example most of the sequencing, controlling and signal measurement and routing items 70, 55, 56, 50, 65, 66, 60, 71, 72, 73, 74, 75, 76, 77, 78, 79, 91, 92, 93, 94 could be implemented by means of a single microcontroller containing integrated peripheral blocks like analog to digital converters, pulse-width modulators and pulse generators.

It is also apparent that the number of individually driven EL lamps can be expanded from two to an arbitrary number by controlling the EL lamp with the highest luminescent brightness setpoint with the closed-loop controller which controls the charging and discharging means, and the rest of the EL lamps each by a closed-loop controller which controls the charge time of the respective EL lamp by pulse-width modulation.

### Reference numerals

- 10: charging means
- 11: switching device
- 12: discharging means
- 13: switching device
- 14: supply node
- 20-23: switching device
- 24-27: diode
- 28: EL lamp
- 28', 29: control line
- 30-33: switching device
- 34-37: diode
- 38: EL lamp
- 38', 39: control line
- 40: controlling device
- 41: setpoint input
- 42: setpoint input
- 44: discharging means control signal
- 45: charging means control signal
- 46: charging switching device control signal
- 47: discharging switching device control signal
- 50: PI controller
- 51: subtractor
- 52: amplifier
- 53: integrator
- 54: adder
- 55, 56: multiplexer
- 57: setpoint input of PI controller 50
- 58: actual value input of PI controller 50
- 59: output of PI controller 50
- 60: PI controller
- 61: subtractor
- 62: amplifier
- 63: integrator
- 64: adder
- 67: setpoint input of PI controller 60
- 68: actual value input of PI controller 60
- 69: output from PI controller 60
- 70: comparator
- 71: sequencer
- 72: pulse-width modulator
- 80: comparator output
- 83: output of the pulse-width modulator 72
- 84: node with actual value of the EL lamp 28
- 85: node with actual value of the EL lamp 38
- 91, 93: difference amplifier
- 92, 94: rectifier
- 128: waveform of the voltage over EI lamp 28
- 138: waveform of the voltage over EI lamp 38

## Claims

1. Electroluminescent (EL) lamp driver for controlling the luminescent brightness of at least two EL lamps (28, 38), comprising means for receiving at least two luminescent brightness setpoint values for said EL lamps and at least one charging means, **characterized by** control means for setting the luminescent brightness of the EL lamp with the highest luminescent brightness setpoint by controlling an output parameter of the charging means (10), and for setting the luminescent brightness of an EL lamp with a lower luminescent brightness setpoint by controlling a time interval during which this EL lamp or these EL lamps is/are charged in parallel to the first EL lamp.

2. EL lamp driver according to claim 1, wherein said control means comprises means for generating charge waveforms (128, 138) in accordance with the received setpoint values for charging or discharging the EL lamps (28, 38).

3. EL lamp driver according to claim 1 or 2, wherein said control means comprises means for generating a first charge waveform (128) for charging a first one of the EL lamps (28 or 38) with the highest desired luminescent brightness and a second charge waveform for charging a second EL lamp (38 or 28) with lower desired luminescent brightness.

4. EL lamp driver according to claim 3, wherein the first charge waveform (128) fully charges the first one of the EL lamps (28 or 38) with the highest desired luminescent brightness and the second charge waveform has essentially the same waveform (138) as the first charge waveform (128) during a time interval which is smaller than the time interval during which the first one of the EL lamps is charged.

5. EL lamp driver according to any one of claims 1 to 4, wherein said control means(40; 50, 55, 56, 60, 65, 66, 70-79, 91-94) is adapted to receive on its inputs the luminescent brightness setpoint values (41, 42) for at least two EL lamps (28, 38) and actual values (84, 85) corresponding to the actual luminescent brightness of the at least two EL lamps (28, 38), to compare the respective setpoint value and actual value for each of the at least two lamps, and to drive charging means (10), discharging means (12), and H-bridges (20-23, 30-33) for the EL lamps (28, 38) in such a way that the setpoint value and the actual value for each of the at least two EL lamps (28, 38) are substantially equal.

6. EL lamp driver according to any one of claims 1 to 5, wherein said control means comprises a controller (50, 60) for each of the at least two EL lamps (28, 38), wherein each controller (50, 60) receives on its inputs (57, 58, 67, 68) the setpoint value and the actual value of a corresponding one of the at least two EL lamps (28, 38) and is adapted to generate a control signal (59, 69) on its output for controlling the charging and discharging means (10, 12) or a pulse-width modulator (72) for generating a control signal (83) for controlling the charging or discharging of the EL lamp or lamps with the lower luminescent brightness setpoint or setpoints.

7. EL lamp driver according to any one of claims 1 to 6, wherein the charging means (10) comprise a high voltage power supply which is able to source current into the EL lamps (28, 38).

8. EL lamp driver according to claim 7, wherein the power supply is a step-up switching power supply with a control input for setting the duty cycle on the primary side switching.

9. EL lamp driver according to any one of claims 1 to 8, wherein the discharging means (12) comprise a control input for determining the amount of sink current.

10. EL lamp driver according to claim 9, wherein the discharging means (12) comprises a resistor, a current sink based on a transistor, or a step-down switching power supply with a charge storage device on the primary side for absorbing energy removed from the EL lamp or lamps.

11. EL lamp driver according to any one of the preceding claims, wherein said output parameter comprises an output voltage and/or an output current of said charging device
